# EUROPEAN PATENT APPLICATION

(11) **EP 4 456 445 A1**
(43) Date of publication of application: **30.10.2024**
(21) Application number: 24164163.8
(22) Date of filing: 18.03.2024
(51) Int. Cl.: H04B 7/185, H04L 12/46, H04L 69/08

(54) **SYSTEMS AND METHODS TO TRANSFER ACARS DATA DIRECT TO AIRLINE OPERATORS**

(30) Priority: 10.04.2023 US 202318298289
(71) Applicant: Honeywell International Inc., Charlotte, NC 28202 (US)
(72) Inventor: JUDD, Thomas D., Charlotte, 28202 (US); PAKKI, Sathish, Charlotte, 28202 (US)
(74) Representative: Haseltine Lake Kempner LLP

(57) **Abstract**

Embodiments are directed to a system comprising a communications management system and an AoIP gateway server on a vehicle. The system is configured to receive and send ACARS messages directly to and from at least one ground operations center. In certain embodiments, ACARS messages are converted between a format that is native to the communications management system to a format that is native to the ground operations center. Accordingly, ACARS messages can be sent directly from a vehicle to a ground operations center without routing the ACARS message to a datalink service provider.

## Description

### BACKGROUND

In the aerial navigation context, aircraft communicate with external entities before takeoff, during navigation, and upon arriving to a destination. For example, aircraft send and receive messages from one or more aircraft operations centers when the aircraft is approaching a landing site. Modern aircraft utilize Aircraft Communication Addressing and Reporting Systems (ACARS) for sending ACARS messages to the aircraft operational center and for receiving an ACARS message from an aircraft operational center. These messages are typically represented to the aircraft in the form of text datalink messages that are displayed on an avionics device associated with the aircraft.

In conventional ACARS communications, an aircraft prepares a downlink message in an A618 format (defined by the Aeronautical Radio, Inc. (ARINC) industry standards)). However, ground operations centers do not use the A618 format when handling messages from aircraft. Instead, ground operations centers typically process downlink messages and generate uplink messages in the A620 format, which is not native to aircraft. Neither the aircraft nor the ground operations center is able to process ACARS messages that are in a format that is not native to the respective entity.

In order to properly facilitate communications between aircraft and ground operations centers, a third-party (referred to as a datalink service provider) typically processes and forwards the ACARS messages in the appropriate format for the intended recipient. This means that the aircraft does not send ACARS messages directly to the ground operations center, and vise-versa. Instead, when an aircraft "sends" an ACARS message to a ground operations center, it is actually sending the ACARS message to the digital service provider over a communication link (e.g., high frequency (HF), very-high frequency (VHF), satellite communications (SATCOM)), which processes the ACARS messages and sends it to the ground operations center. A similar procedure exists in the uplink direction.

This approach to ACARS communication often requires an ACARS message to be forwarded between multiple entities managed by the datalink service provider, resulting in multiple "hops" before the ACARS message is ultimately received at the ground operations center. Each hop adds to the delay before the recipient can view the message. Furthermore, many ACARS messages must be sent to multiple recipients, each requiring the ACARS message to undergo multiple hops before it reaches each recipient.

Therefore, a need exists to expedite ACARS communication to and from one or more ground operations centers.

### SUMMARY

The details of one or more embodiments are set forth in the description below. The features illustrated or described in connection with one exemplary embodiment may be combined with the features of other embodiments. Thus, any of the various embodiments described herein can be combined to provide further embodiments. Aspects of the embodiments can be modified, if necessary to employ concepts of the various patents, applications and publications as identified herein to provide yet further embodiments.

In one embodiment, a system is disclosed. The system comprises a communications management system coupled to a vehicle. The system comprises an Aircraft Communications, Addressing, and Reporting System (ACARS) over Internet Protocol (AoIP) gateway server coupled to the communications management system on the vehicle. The AoIP gateway server comprises at least one processor, and is configured to convert an ACARS message from a first message format to a second message format. When the ACARS message is a downlink message, the first message format represents a format that is used by the communications management system for processing ACARS messages, and the second message format represents a format that is used by at least one ground operations center for processing ACARS messages. The communications management system is configured to receive or generate the downlink message, and to send the downlink message in the first message format to the AoIP gateway server. The AoIP gateway server is configured to send the downlink message in the second message format to the at least one ground operations center. When the ACARS message is an uplink message, the first message format represents a format that is used by the at least one ground operations center for processing ACARS messages, and the second message format represents a format that is used by the communications management system for processing ACARS messages. The AoIP gateway server is configured to receive the uplink message in the first message format directly from the at least one ground operations center. The AoIP gateway server is configured to forward the uplink message in the second message format to the communications management system.

In another embodiment, a system is disclosed. The system comprises a communications management system coupled to a vehicle; and an Aircraft Communications, Addressing, and Reporting System (ACARS) over Internet Protocol (AoIP) gateway server coupled to the communications management system on the vehicle. The AoIP gateway server comprises at least one processor. The communications management system is configured to convert an ACARS message from a first message format to a second message format. When the ACARS message is a downlink message, the first message format represents a format that is used by the communications management system for processing ACARS messages, and the second message format represents a format that is used by at least one ground operations center for processing ACARS messages. At least one of the communications management system or the AoIP gateway server is configured to send the downlink message in the second message format to the at least one ground operations center. When the ACARS message is an uplink message, the first message format represents a format that is used by the at least one ground operations center for processing ACARS messages, and the second message format represents a format that is used by the communications management system for processing ACARS messages. At least one of the AoIP gateway server or the communications management system is configured to receive the uplink message directly from the at least one ground operations center. The uplink message designates at least one intended recipient of the uplink message,
In yet another embodiment, a method for processing an Aircraft Communications, Addressing, and Reporting System (ACARS) message between a vehicle and at least one ground operations center is disclosed. The method comprises (a) when the ACARS message is a downlink message originating from a system on the vehicle, generating the downlink message in a message format used by the at least one ground operations center for processing ACARS messages. The method further comprises sending the downlink message in the message format directly to the at least one ground operations center via an ACARS over Internet Protocol (AoIP) communication link. When the ACARS message is an uplink message originating from the at least one ground operations center, the method comprises receiving the uplink message directly from the at least one ground operations center via the AoIP communication link. The uplink message is in the message format used by the at least one ground operations center for processing ACARS messages. The uplink message designates an intended recipient on the vehicle. The method further comprises processing the uplink message based on the intended recipient. When the intended recipient is an avionics device on the vehicle, the method comprises forwarding the processed uplink message to the intended recipient.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, as briefly referenced as follows and described with particularity in the detailed description.
Figure 1 depicts a block diagram of a system configured to communicate ACARS messages directly to and from at least one ground operations center, as described in one or more embodiments.
Figure 2 depicts a flow diagram of a method for sending ACARS downlink messages directly to at least one ground operations center, as described in one or more embodiments.
Figure 3 depicts a flow diagram of a method for processing ACARS uplink messages received directly from at least one ground operations center, as described in one or more embodiments.
Figure 4 depicts a flow diagram of a method for converting ACARS messages between a communications management system and at least one ground operations center, as described in one or more embodiments.
Figure 5 depicts a block diagram of a system configured to communicate ACARS messages directly to and from at least one ground operations center, as described in one or more embodiments.
Figures 6A-6B depict flow diagrams of methods for processing downlink and uplink ACARS messages, respectively, directly from at least one ground operations center, as described in one or more embodiments.
Figure 7 depicts a flow diagram of a method for processing a downlink ACARS message, as described in one or more embodiments.
Figure 8 depicts a flow diagram of a method for processing an uplink ACARS message, as described in one or more embodiments.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

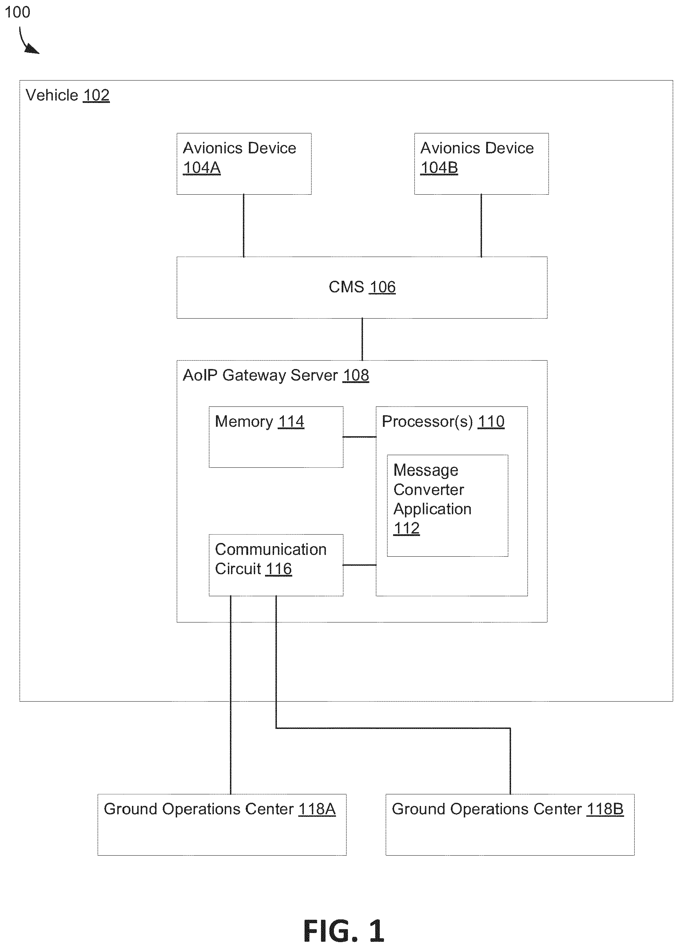

Figure 1 depicts a block diagram of a system configured to communicate ACARS messages directly to and from at least one ground operations center. System 100 includes one or more vehicles 102 in communication with one or more ground operations centers 118. For pedagogical explanation, one vehicle 102 and two ground operations centers 118A, 118B are shown in Figure 1, understanding that any number of vehicles 102 and ground operations centers 118 can form part of the system 100.

Use of the term "vehicle" is not intended to be limiting and includes all classes of vehicles configured for ACARS communication that fall within the ordinary meaning of the term. This would include but not limited to, aerial traversing vehicles (e.g., commercial, non-commercial, or recreational aircraft), unmanned and/or space traversing vehicles (e.g., satellites, urban air mobility vehicles), water traversing vehicles (e.g., ships, submarines), and land traversing vehicles (e.g., automobiles including cars, trucks, motorcycles). Throughout the disclosure, the vehicle 102 is further illustrated as an aircraft understanding that the principles described herein apply to other vehicles where applicable.

Each ground operations center 118 is a ground entity that is configured to communicate with the vehicle 102. Multiple ground operations centers 118 can correspond to an airport or landing site, or may correspond to different landing sites. In some examples, the ground operations centers 118 are an airline operator, meteorological data application, maintenance data application, or an information services application. A ground operations center can be implemented as a central system and/or can be distributed as multiple systems in a terrestrial network.

Vehicle 102 includes at least one avionics device 104 coupled to a communications management system (CMS) 106. For pedagogical explanation, two avionics devices 104A, 104B are shown in Figure 1. Avionics devices 104A, 104B can be an onboard avionics device that is affixed to (for example, mounted on) the interior of the vehicle, such as the cockpit or electronic equipment (EE) bay. Alternatively, avionics device 104A, 104B are an offboard avionics device that is portable and can be taken on and off the vehicle. Examples of onboard and offboard avionics devices include a navigational display device, a primary flight display, a Maintenance Terminal, a Cabin terminal, an electronic flight bag (EFB), flight management system, Aircraft condition monitoring system, or a tablet, smartphone, or other portable electronic device (PED) that is configured for running one or more avionics applications with a display or interface. Some of the avionics devices 104A, 104B include at least one human-machine interface (HMI) that is configured to display and visualize data to the vehicle personnel (for example, operator and flight crew), and also enables the personnel to input or select data. For example, the HMI includes or is coupled to any kind of input device (computer mouse, buttons, switches, keyboard, curser control device, display, and the like). In some examples, the HMI includes a screen with touchscreen functionality or cursor selection capability so that the vehicle personnel can input data directly on the screen. Alternatively, the avionics devices 104A, 104B do not include an individual human-machine interface and instead interface to one or more HMIs implemented on the vehicle 102 (which can be shared between different avionics devices).

Each avionics device 104A, 104B is coupled to CMS 106, e.g., through a wired or wireless connection or intermediate system (such as an AID (Aircraft Interface Device)). CMS 106 is configured to send downlink messages initiated by an avionics device 104A, 104B, and receive uplink messages from a ground operations center 118A, 118B. Optionally, each avionics device 104A, 104B registers with the CMS 106 before the avionics device 104A, 104B receives or transmits data to CMS 106. In some examples, CMS 106 is configured to generate downlink messages independently of the avionics devices 104A, 104B. CMS 106 is or includes a communications management unit (CMU) or implemented as a communications management function (CMF) executed by one or more processors.

Vehicle 102 also includes an ACARS over Internet Protocol (AoIP) gateway server 108 coupled to CMS 106. AoIP gateway server 108 is configured to implement AoIP functionality for the vehicle 102. AoIP gateway server 108 includes at least one processor 110, a memory 114, and a communication circuit 116. Vehicle 102 can include additional systems and circuitry not specifically identified in Figure 1.

Processor 110 is configured to process ACARS messages suitable for communication via AoIP. Processor 110 may include any one or combination of processors, microprocessors, digital signal processors, application specific integrated circuits, field programmable gate arrays, and/or other similar variants thereof. Processor 110 may also include, or function with, software programs, firmware, or other computer readable instructions for carrying out various process tasks, calculations, and control functions, used in the methods described below. These instructions are typically tangibly embodied on any storage media (or computer readable media) used for storage of computer readable instructions or data structures. Specifically, in some examples processor 110 includes or is configured to execute a message converter application 112 for converting messages to and from vehicle 102 and the ground operations centers 118A, 118B, as subsequently described. The message converter application 112 is implemented as a program product comprising computer readable instructions for performing the AoIP processing functions as subsequently described.

Memory 114 can include any available storage media (or computer readable medium) that can be accessed by a general purpose or special purpose computer or processor, or any programmable logic device. Suitable computer readable media may include storage or memory media such as semiconductor, magnetic, and/or optical media, and may be embodied as storing instructions in non-transitory computer readable media, such as random access memory (RAM), read-only memory (ROM), non-volatile RAM, electrically-erasable programmable ROM, flash memory, or other storage media. The memory may also include one or more databases to store acquired data. For example, memory 114 is configured to store suitable ACARS messages in a storage medium or database before they are sent to one or more ground operations centers 118A, 118B. In a particular example, AoIP gateway server 108 is configured to determine, based on the message type of the ACARS message, that the ACARS message is a store/forward message (such as a message containing maintenance data), and stores the store/forward message until an AoIP communication link is available with the intended ground operations center(s).

When CMS 106 receives or generates an ACARS downlink message, it is configured to process the ACARS downlink message in a message format native to the CMS. For example, in current industry standards, CMS 106 uses an A618 format to process ACARS messages, and accordingly, expects that any uplink message that it receives will be of this message format. An ACARS message in a message format different than the message format native to the CMS 106 may not be able to be processed by the CMS. In the ARINC example above, the CMS 106 processes an ACARS message in the ARINC 618 (A618) format and sends the ACARS message in the A618 format to AoIP gateway server 108. For other implementations, the CMS 106 sends the ACARS message to the AoIP gateway server 108 in a first message format that is native to CMS 106. An ACARS message can originate from the CMS 106, in which the CMS 106 is the entity that generated the ACARS message. Current CMS generate an ACARS message that originated from the CMS in the A618 format. Alternatively, the CMS 106 receives a downlink message from one or more of the avionics devices 104. An avionics device 104 may also use a message format that is different than the message format native to the CMS 106 for processing the received downlink message, such as the A619 format. In this case, CMS 106 is configured to convert the received downlink message from the A619 format to the native A618 format used by the CMS.

Conventionally, a CMS may send the ACARS message in the A618 format via the radios & digital service provider (DSP) intended for one or more of the ground operations centers 118A, 118B using a wireless communication link, such as a high-frequency (HF), very high-frequency (VHF), satellite communications (SATCOM), WiMax, or other link. In conventional implementations, the ACARS message is forwarded to a DSP that processes the ACARS message into a suitable format and sends the ACARS message to each ground operations center 118A, 118B. Accordingly, conventional ACARS systems on the vehicle 102 do not have the capacity to directly send/address ACARS messages to a ground operations center.

In contrast, vehicle 102 is configured to send/address ACARS messages directly to a ground operations center 118A, 118B without routing the ACARS message via a DSP. When AoIP gateway server 108 receives an ACARS message from CMS 106, it is configured (e.g., via message converter application 112) to convert the ACARS message from a format that is native to the CMS 106 (ARINC 618) to a format that is native to each intended ground operations center 118A (ARINC 620), and provides the appropriate IP address for the destination operations center 118B that is the recipient of the ACARS message. In the ARINC example, AoIP gateway server 108 is configured to convert the ACARS message received in the A618 format from CMS 106 to an A620 format that is used by ground operations center 118A, 118B for processing ACARS messages. In doing so, the ACARS message output by the AoIP gateway server 108 will be in the A620 format and can be sent directly to the intended ground operations center(s) 118A, 118B over an IP communication link.

In some examples, AoIP gateway server 108 converts messages in different formats based on the content of the ACARS message. Processor 110 receives the ACARS message from CMS 106 and determines the message type from the ACARS message as represented by the label or label/sublabel heading of the message. To map the ACARS message to the intended ground operations center 118A, 118B, processor 110 looks up the destination address that corresponds to the ground operations center stored in memory 114. Processor 110 also looks up the appropriate message format (e.g., the appropriate A620 format) that corresponds to the intended ground operations center 118A, 118B. Processor 110 then modifies the ACARS message from the A618 format used by CMS 106 to the A620 format used by the ground operations center. If the ACARS message is intended for multiple ground operations centers 118A, 118B, then the ACARS message can be respectively modified into the appropriate A620 format for each ground operations ACARS message to communication circuit 116, which is configured to transmit the ACARS message in the A620 format used by each intended respective ground operations center 118A, 118B for receiving ACARS messages to the respective ground operations centers directly. In this way, the ACARS message is received in the format expected by the ground operations center 118A, 118B, where it can undergo processing by the ground operations center as would the case if the ACARS message had been forwarded by a DSP.

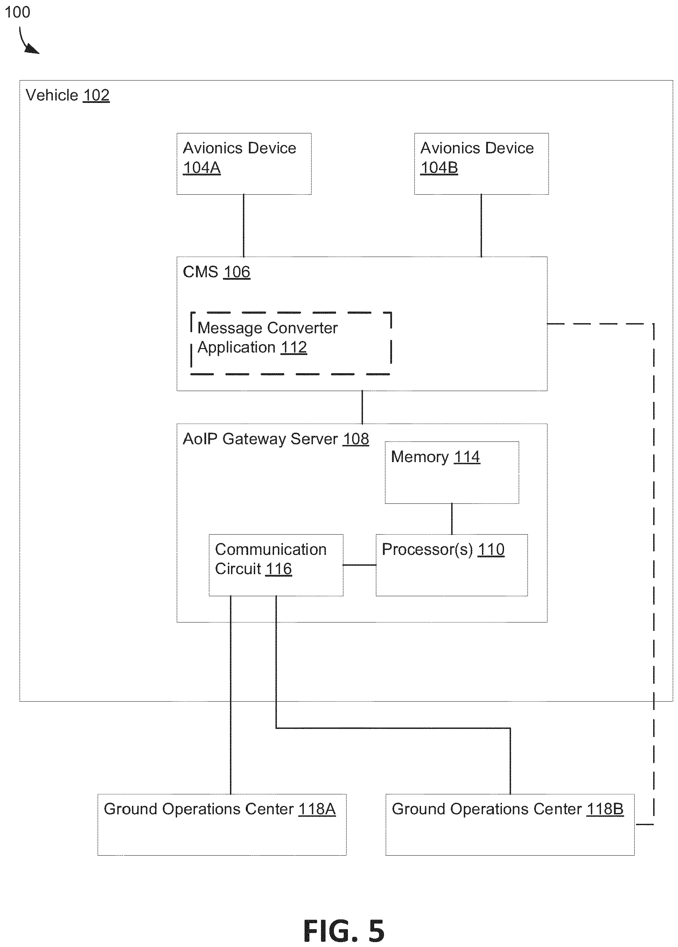

In some examples, AoIP gateway server 108 performs other processing on the ACARS message before sending it to the ground operations center 118A, 118B. For example, the other processing can include compressing the ACARS message and sending the ACARS message in a compressed format to the ground operations center 118A, 118B. In some examples, the other processing includes encrypting the ACARS message based on a security protocol so that only the intended ground operations center 118A, 118B is able to access the content of the ACARS message in the A620 format. Such compression and encryption can also be performed by the CMS 106 (see Figure 5).

In the uplink direction, a ground operations center 118A generates an ACARS message in a message format native to the ground operations center. The ground operations center 118A processes the ACARS message in a message format that is native to the ground operations center, such as an A620 message format. Because the vehicle 102 is configured via AoIP gateway server 108 to receive ACARS messages in the message format used by the ground operations center 118A, the ground operations center can send/address the message via the internet directly to the vehicle 102 instead of forwarding the ACARS message to an external DSP. Importantly, the process of the ground operations center 118A for transmitting ACARS messages to the vehicle 102 does not change by the message conversion functions of the vehicle 102, except that it enables the ground operations center 118A to transmit the ACARS message directly to vehicle 102 instead of using a DSP. In some examples, the ACARS message is directly transmitted from the ground operations center 118A to communication circuit 116 via an IP communication link.

The AoIP gateway server 108 is configured to receive the uplink ACARS message directly from the ground operations center 118A in the A620 format. Communication circuit 116 provides the ACARS message to processor 110, which is configured to convert the ACARS message from the A620 format to a format that is native to the CMS 106. In the ARINC example, processor 110 converts the ACARS message in the A620 format to the A618 format that is used by CMS 106 for receiving ACARS messages. AoIP gateway server 108 then forwards the ACARS message in the A618 format to CMS 106, as would be expected by the CMS if the ACARS message was received from a DSP. CMS 106 is configured to process the ACARS message in the A618 format and route the ACARS message to its intended recipient on the vehicle 102, which can be one of the avionics devices 104A, 104B, or the CMS 106 itself. When the intended recipient is one of the avionics devices 104, CMS 106 is configured to convert the ACARS message from the A618 format to the A619 format (or another format that is native to the intended recipient), and routes the ACARS message in the A619 format to the intended avionics device.

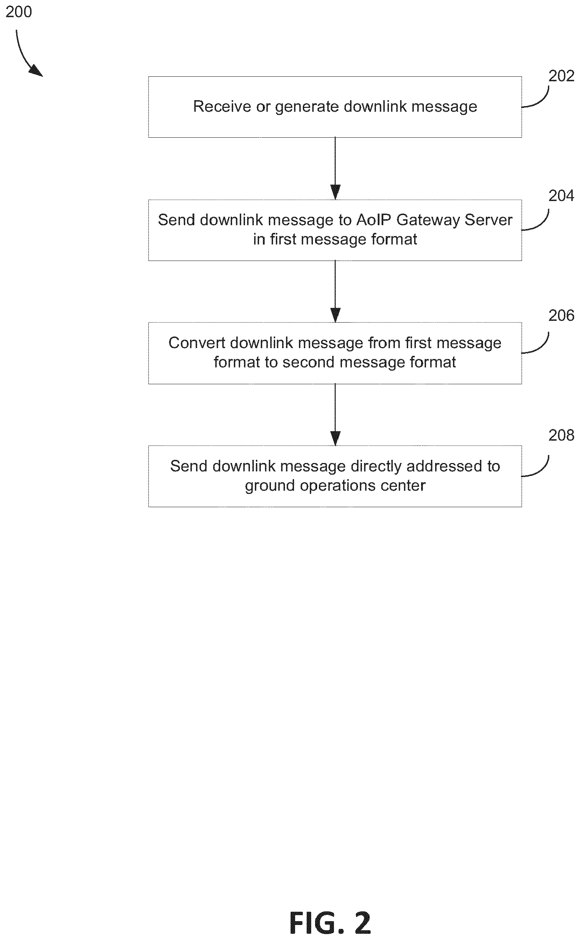

Figure 2 depicts a flow diagram of a method for sending ACARS downlink messages directly to at least one ground operations center. Method 200 may be implemented via the techniques described with respect to Figure 1, but may be implemented via other techniques as well. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner). Also, most standard exception handling is not described for ease of explanation; however, it is to be understood that method 200 and the other methods described herein can and typically would include such exception handling. In some examples, method 200 is performed by the CMS 106 and AoIP gateway server 108 of Figure 1.

Method 200 includes receiving or generating a downlink message at block 202. In some examples, an ACARS downlink message from an avionics device is received and processed by the CMS. Alternatively, the CMS is configured to generate an ACARS downlink message. After generating the downlink message, method 200 sends the downlink message to an AoIP gateway server in a first message format that is used by the CMS for processing the downlink messages (block 204). In the ARINC example described in Figure 1, the first message format is an A618 message format.

At block 206, method 200 proceeds by converting the downlink message from the first message format to a second message format. The second message format is used by a ground operations center for processing downlink messages from the vehicle. In the ARINC example described in Figure 1, the second message format is an A620 message format.

Method 200 then proceeds to block 208 and sends the downlink message to one or more ground operations centers. Since the downlink message has been converted to the second message format, the downlink message can be directly sent/addressed to each intended ground operations center. As the downlink message is sent in the message format expected by the respective ground operations center, the ground operations center can process the downlink message in the same way as if the downlink message was sent indirectly from the vehicle using an HF, VHF, SATCOM, or other communication link that routes the downlink message to a DSP.

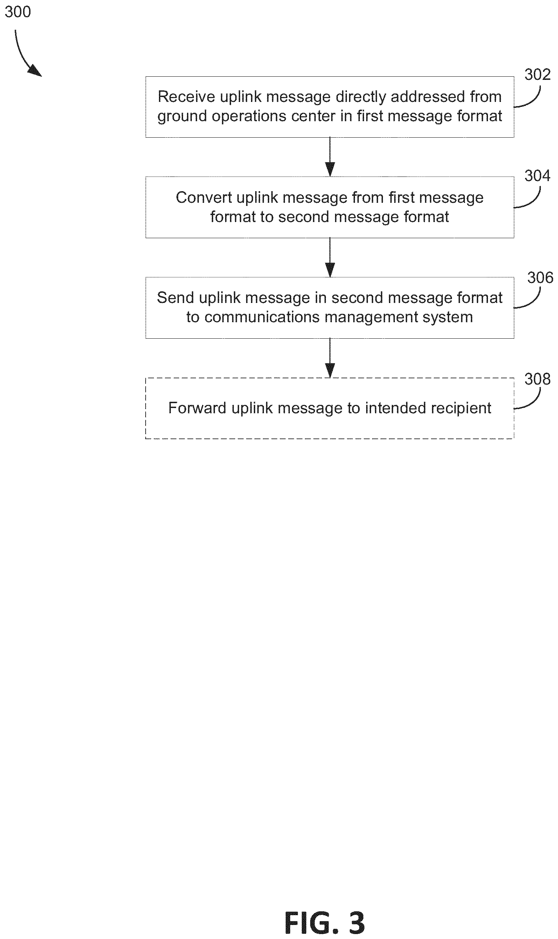

Figure 3 depicts a flow diagram of a method 300 for processing ACARS uplink messages directly from at least one ground operations center. Method 300 is performed by an AoIP gateway server and CMS, such as the AoIP gateway server 108 and CMS 106 illustrated in Figure 1.

Method 300 includes receiving an uplink message from one or more ground operations centers at block 302. The uplink message for a respective ground operations center is received in a first message format that is used by the ground operations center for processing uplink messages to the vehicle. In the ARINC example, the first message format is an A620 message format. For pedagogical explanation, only a single uplink message from one ground operations center is described. Specifically, the uplink message addressed to the aircraft is received via an IP link to the vehicle directly from the ground operations center without the use of a DSP.

Method 300 proceeds to block 304 and converts the uplink message from the first message format (native to the ground operations center) to a second message format that is native to the CMS. In the ARINC example, the AoIP gateway server is configured to convert the uplink message from an A620 message format to an A618 message format that is used by the CMS for processing uplink messages. At block 306, method 300 then sends the uplink message to the CMS in the second message format.

Proceeding to block 308, method 300 forwards the uplink message to the intended recipient on the vehicle. For example, the uplink message may be designated to an avionics device in the A619 format; the CMS in this example then processes the uplink message and forwards it to the appropriate avionics device as identified from the content of the message. In other examples, the uplink message can be designated to the CMS itself, in which case the CMS does not need to forward the uplink message to another entity. Thus, block 308 is optional.

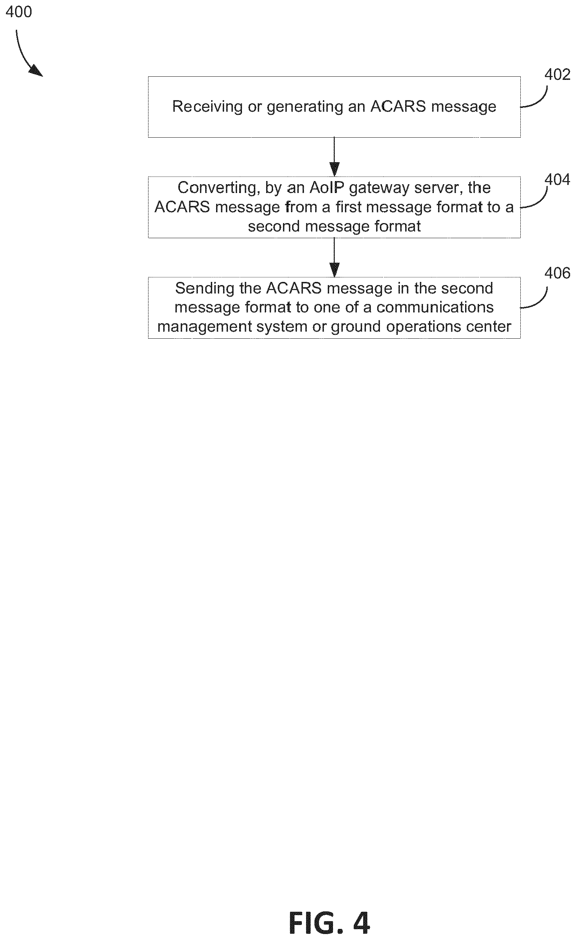

Figure 4 depicts a flow diagram of a method 400 for converting ACARS messages between a communications management system and at least one ground operations center. Method 400 can be performed for ACARS messages transmitted in the downlink or uplink direction. For example, method 400 can be performed with the CMS 106 and AoIP gateway server 108 as illustrated in Figure 1.

Method 400 includes receiving or generating an ACARS message at block 402. In the downlink direction, the ACARS message is received or generated at the CMS. Specifically, the ACARS message can be received at the CMS from an avionics device, or the CMS can generate the ACARS message. In the uplink direction, the AoIP gateway server receives an uplink ACARS message directly from one or more ground operations centers (e.g., via an IP communication link). The ACARS message is received or generated in a first message format that is native to the entity that originated the message. In the downlink direction, the ACARS message is received or generated in a message format that is used by the CMS for processing ACARS messages, such as the A618 message format previously described. In the uplink direction, the ACARS message is received by the AoIP gateway server in a message format that is used by the ground operations center for processing messages, such as the A620 message format previously described. Because the AoIP gateway server is configured to process A620 messages, the AoIP gateway server can receive the A620 message directly even though the CMS uses different message formats.

Method 400 proceeds to block 404 and converts the ACARS message from the first message format to a second message format. Depending on the mode of transmission, the second message format represents a message format that is native to either the CMS or ground operations center. For example, for a downlink message, the second message format is a message format that is used by the ground operations center for receiving and processing ACARS messages (e.g, the A620 format). For an uplink message, the second message format is a message format that is used by the CMS for processing ACARS messages (e.g., the A618 format). The conversion of messages between the two formats is performed by the AoIP gateway server, for example, by message converter application 112. In doing so, ACARS messages can be exchanged directly from a ground operations center and a vehicle without having to route messages to a DSP.

Proceeding to block 406, method 400 sends the ACARS message in the second message format to one of the CMS or ground operations center. For example, for a downlink message, the AoIP gateway server sends the message in the A618 format to the CMS, which is the message format that is expected by the CMS as if the message was sent using a DSP. For an uplink message, the AoIP gateway server sends the message in the A620 format directly to the ground operations center, which is the message format that is expected by the ground operations center as if the message was sent using a DSP.

Figure 5 depicts a block diagram of a system configured to communicate ACARS messages directly to and from at least one ground operations center, as described in one or more embodiments. Unless otherwise indicated, the reference numerals depicted in Figure 5 correspond to similar structure and function as shown and described in the context of Figure 1. Figure 5 depicts an alternative embodiment for improved processing of ACARS messages in which the CMS 106 (instead of the AoIP gateway server 108) enables direct messaging of ACARS messages between the ground operations centers 118A, 118B.

In some examples, CMS 106 optionally includes the message converter application 112, thereby configuring the CMS 106 to convert messages to formats native to the CMS 106 or a ground operations center 118, depending on the type of ACARS message. In the downlink direction, CMS 106 generates an ACARS message or receives an ACARS message from an avionics device 104. In this example, CMS 106 is configured for processing ACARS messages in the A618 format, similar to a conventional communications management unit. However, unlike a conventional communications management unit, CMS 106 is configured to convert the ACARS message from the A618 format to the message format that is native to the intended ground operations center 118, such as the A620 format. In some examples, CMS 106 forwards the ACARS message in the A620 format to AoIP gateway server 108. AoIP gateway server 108 optionally processes the message and then sends the ACARS message in the A620 format directly to the intended ground operations center 118 via an AoIP communication link. In some examples, the CMS 106 is configured with AoIP functionality. Instead of forwarding the ACARS message to AoIP gateway server 108 in the A620 format, CMS 106 can send the ACARS message directly to the ground operations center 118 via an AoIP communication link.

For more advanced communication management systems, the CMS can be configured to process an ACARS message in the format of the intended ground operations center 118. For example, instead of processing a downlink message in the A618 format and converting the downlink message from the A618 format to the A620 format, the CMS 106 can process an ACARS message exclusively in the A620 format, or another message format that is native to the ground operations center 118 that is the intended recipient of the ACARS message. In this type of implementation, message converter application 112 is unnecessary and hence optional. CMS 106 can then forward the ACARS message in the A620 format to AoIP gateway server 108 for additional processing and eventual transmission to the ground operations center 118, or can send the ACARS message in the A620 format directly to the ground operations center 118 without forwarding to the AoIP gateway server 108.

In the uplink direction, a ground operations center 118 generates an ACARS message in the message format native to the ground operations center (e.g., the A620 format), and sends the ACARS message directly to the vehicle 102 in the A620 message format. In some examples, the ACARS message is sent via an IP communication link to AoIP gateway server 108. AoIP gateway server 108 receives the ACARS message via communication circuit 116, and processor 110 processes the ACARS message in the A620 format. AoIP gateway server 108 then forwards the ACARS message to CMS 106.

CMS 106 processes the ACARS message based on the intended recipient of the message. If the ACARS messages is intended for the CMS 106, then CMS 106 is configured to convert the ACARS message from the A620 format to the A618 format. CMS 106 then processes the ACARS message in the A618 format. Alternatively, CMS 106 can process the ACARS message directly in the A620 format. If the ACARS message is intended for one of the avionics devices 104, then CMS 106 converts the ACARS message from the A620 format to the A618 format and processes the message. CMS 106 then converts the ACARS message from the A618 format to the A619 format and forwards the ACARS message in the A619 format to the intended avionics device 104. Alternatively, CMS 106 can process the ACARS message in the A620 format and convert the ACARS message from the A620 format to the A619 format suitable for the intended avionics device 104.

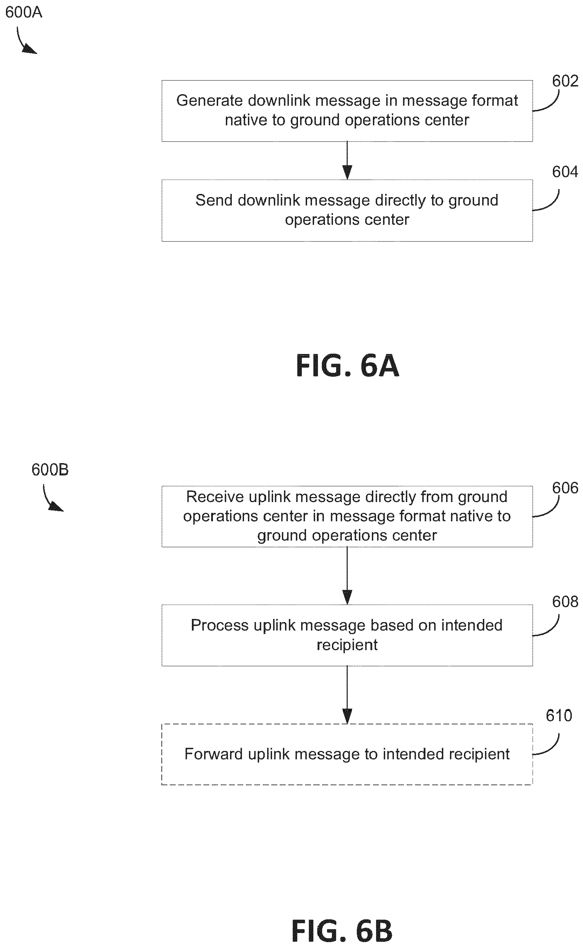

Figures 6A-6B depict flow diagrams of methods for processing downlink and uplink ACARS messages, respectively, directly from at least one ground operations center. Figure 6A illustrates a method 600A of processing downlink ACARS messages, while Figure 6B illustrates a method 600B of processing uplink ACARS messages. Figures 6A-6B can be implemented using the system 100 described in Figure 5.

Method 600A includes generating a downlink message in a message format native to a ground operations center at block 602. The downlink message is generated based on the embodiment. In some examples, the CMS converts an existing ACARS message (either a message received from an avionics device or a message originating from the CMS) from a message format native to the CMS to a message format native to the ground operations center, e.g., from the A618 to the A620 format. However, for more advanced systems, the CMS can generate the ACARS message in the message format native to the ground operations center without first converting the message to the A618 format.

Method 600A also includes sending the downlink message directly to the ground operations center at block 604. In some examples, the CMS forwards the downlink message to an AoIP gateway server in the message format native to the ground operations center, and the AoIP gateway server sends the downlink message directly to the ground operations center via an IP communication link. In other examples, the CMS can establish a direct communication link with the ground operations center and send the downlink message directly to the ground operations center over that communication link. A DSP is not used in routing the downlink message to the ground operations center at block 604.

Now referring to Figure 6B, method 600B includes receiving an uplink message directly from the ground operations center in a message format native to the ground operations center at block 606. As an example, the uplink message is received in the A620 format without routing of the uplink message by a DSP. Proceeding to block 608, method 600B includes processing the uplink message based on the intended recipient. For example, the uplink message can be processed in the A620 format by the AoIP gateway server and forwarded to the CMS. For some CMS, it may be necessary to convert the uplink message from the A620 format to a format native to the CMS, such as the A618 format, in order to undergo further processing. For more advanced CMS, the CMS can process the uplink message in the A620 format. If the intended recipient is an avionics device, then the CMS can process the uplink message in the A620 or A618 format, and convert the uplink message to the A619 format. Method 600B optionally includes forwarding the uplink message to the intended recipient at block 610. If the intended recipient is an avionics device, then the CMS forwards the uplink message in the A619 format to the avionics device. However, if the uplink message is intended for the CMS, then it does not need to forward the uplink message at block 610.

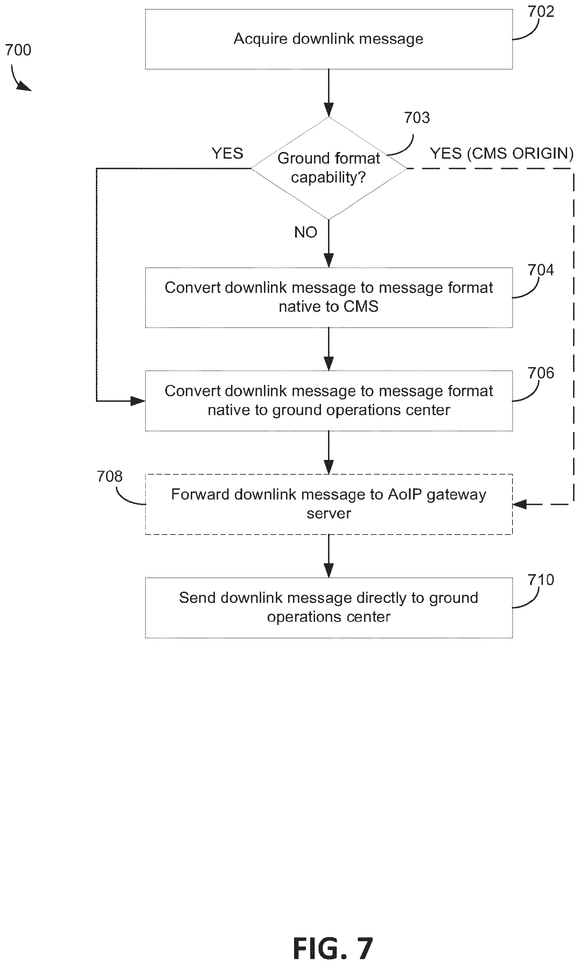

Figure 7 depicts a flow diagram of a method for processing a downlink ACARS message. Method 700 can be performed with the CMS and the AoIP gateway server of system 100, particularly with reference to Figure 5. Method 700 includes acquiring a downlink message at block 702. The CMS can acquire the downlink message by generating its own downlink message or by receiving a downlink message from one of the avionics devices.

How method 700 proceeds depends on the characteristics of the CMS. At block 703, method 700 processes the downlink message based on whether the CMS supports a ground format capability. For conventional CMS that process messages in message formats different than the A620 format used by ground operations centers, method 700 proceeds to block 704 and converts the downlink message to a message format that is native to CMS, e.g., the A618 format. Such CMS do not have ground format capability to automatically generate a downlink message to the format that is native to the ground operations center. Once the CMS converts the downlink message to the format that is native to the CMS, the CMS is able to process the downlink message. Method 700 proceeds to block 706, in which the CMS converts the downlink message to the message format that is native to the ground operations center for processing the downlink message. For example, block 706 can be performed via the message converter application 112 implemented on the CMS.

For more advanced CMS that support ground format capability to generate and/or process a downlink message in a format native to the ground operation center, method 700 can proceed directly from block 703 to block 706 and convert the downlink message to the message format native to the ground operations center designated by the downlink message. This step can occur, for example, where the CMS supports ground format capability processing and receives a downlink message from one of the avionics devices 104. Accordingly, the CMS can convert the downlink message from the format native to the avionics device (e.g., the A619 format) to the format native to the ground operations center (e.g., the A620 format) and process the downlink message.

Method 700 optionally proceeds to block 708 and forwards the downlink message in the A620 format to the AoIP gateway server. If the downlink message originates from the CMS, and the CMS supports ground format capability processing, then method 700 can proceed directly to optional block 708. Alternatively, in some examples the CMS can send the downlink message to the ground operations center without forwarding the downlink message to the AoIP gateway server. Therefore, block 708 is optional. Method 700 then proceeds to block 710 and sends the downlink message in the A620 format directly to the ground operations center without routing the message to a datalink service provider. Block 706 can be performed by the AoIP gateway server or the CMS. If block 708 is not implemented, then method 700 can proceed directly to block 710 from block 706 or block 703 depending on the implementation. As a result, the downlink message is sent from the vehicle directly to the ground operations center in the format native to the ground operations center, which thereby improves the efficiency of ACARS communication between the vehicle and the ground operations center.

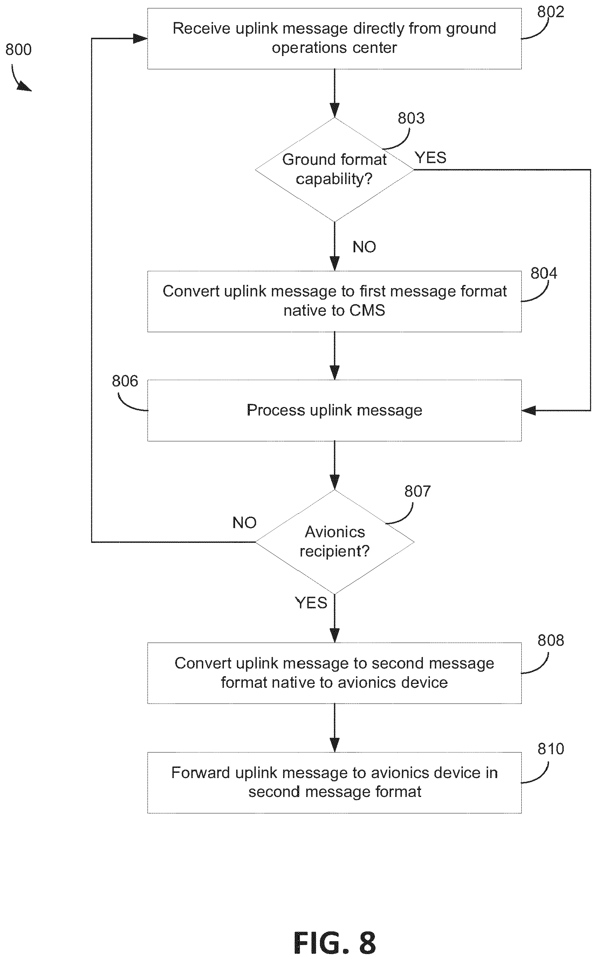

Figure 8 depicts a flow diagram of a method for processing an uplink ACARS message. Method 800 can be performed with the CMS and the AoIP gateway server of system 100, particularly with reference to Figure 5. Method 800 includes receiving an uplink message directly from at least one ground operations center at block 802. Block 802 can be performed by the AoIP gateway server or the CMS depending on which entity receives the uplink message. If the uplink message is received by the AoIP gateway server, then the AoIP gateway server forwards the uplink message to the CMS for further processing.

Proceeding to block 803, the uplink message is processed at the CMS based on whether the CMS supports ground format capability processing. For conventional CMS that process messages in message formats different than the A620 format used by ground operations centers, method 800 proceeds to block 804 and converts the uplink message from the A620 format to a first message format that is native to the CMS for processing the uplink message. Such CMS do not have ground format capability to automatically process an uplink message in the format that is native to the ground operations center. Method 800 then proceeds to block 806 and processes the uplink message in the message format native to the CMS. For more advanced CMS that support ground format capability processing, method 800 can proceed directly from block 803 to block 806 and processes the uplink message in the format that is native to the ground operations center that sent the message.

At block 807, method 800 determines whether the uplink message is intended for an avionics device. If the uplink message is not intended for an avionics device (i.e., it is intended for the CMS), then method 800 can revert to block 802 and repeat for a new uplink message. If the uplink message designates an avionics device as its intended recipient, then method 800 proceeds to block 808 and converts the uplink message to a second message format that is native to the avionics device, e.g., the A619 format. Depending on the type of CMS, the message format may be converted to the A619 format from the A618 format or the A620 format. At block 810, method 800 then forwards the uplink message to the avionics device in the second message format.

The methods and techniques described herein may be implemented in digital electronic circuitry, or with a programmable processor (for example, a specialpurpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forma of non-volatile memory, including by way of example semiconductor memory devices, such as erasable programmable read-only memory (EPROM), electrically erasable programmable read-only memory (EEPROM), and flash memory devices; magnetic disks such as internal hard disks and removable disks; magneto-optical disks; and digital video disks (DVDs). Any of the foregoing may be supplemented by, or incorporated in, specially-designed application specific integrated circuits (ASICs).

### EXAMPLE EMBODIMENTS

Example 1 includes a system, comprising: a communications management system coupled to a vehicle; and an Aircraft Communications, Addressing, and Reporting System (ACARS) over Internet Protocol (AoIP) gateway server coupled to the communications management system on the vehicle, wherein the AoIP gateway server comprises at least one processor, wherein the AoIP gateway server is configured to convert an ACARS message from a first message format to a second message format, (a) wherein when the ACARS message is a downlink message, the first message format represents a format that is used by the communications management system for processing ACARS messages, and the second message format represents a format that is used by at least one ground operations center for processing ACARS messages: wherein the communications management system is configured to receive or generate the downlink message, and to send the downlink message in the first message format to the AoIP gateway server, wherein the AoIP gateway server is configured to send the downlink message in the second message format to the at least one ground operations center; (b) wherein when the ACARS message is an uplink message, the first message format represents a format that is used by the at least one ground operations center for processing ACARS messages, and the second message format represents a format that is used by the communications management system for processing ACARS messages: wherein the AoIP gateway server is configured to receive the uplink message in the first message format directly from the at least one ground operations center, wherein the AoIP gateway server is configured to forward the uplink message in the second message format to the communications management system.

Example 2 includes the system of Example 1, wherein when the ACARS message is the downlink message, the first message format is an Aeronautical Radio Incorporated (ARINC)-618 (A618) message format, wherein the second message format is an ARINC-620 (A620) message format, wherein when the ACARS message is the uplink message, the first message format is an A620 message format, wherein the second message format is an A618 message format.

Example 3 includes the system of any of Examples 1-2, wherein the AoIP gateway server is configured to send the downlink message directly addressed to the at least one ground operations center without forwarding the downlink message to a datalink service provider.

Example 4 includes the system of any of Examples 1-3, wherein the AoIP gateway server is configured to convert the downlink message to the second message format based on a label or label/sublabel content of the downlink message in the first message format.

Example 5 includes the system of any of Examples 1-4, wherein the AoIP gateway server comprises a memory configured to store a destination IP address that corresponds to the at least one ground operations center, wherein the AoIP gateway server is configured to send the downlink message to the at least one ground operations center that corresponds to the destination IP address.

Example 6 includes the system of any of Examples 1-5, wherein the communications management system is configured to receive the downlink message in a third message format from an avionics device associated with the vehicle, wherein the third message format represents a format that is used by the avionics device in generating ACARS messages, wherein the communications management system is configured to convert the downlink message from the third message format to the first message format.

Example 7 includes the system of any of Examples 1-6, wherein the communications management system is configured to convert the uplink message from the second message format to a third message format, wherein the third message format represents a format that is used by an avionics device associated with the vehicle in processing ACARS messages, wherein the communications management system is configured to forward the uplink message in the third message format to the avionics device.

Example 8 includes a system, comprising: a communications management system coupled to a vehicle; and an Aircraft Communications, Addressing, and Reporting System (ACARS) over Internet Protocol (AoIP) gateway server coupled to the communications management system on the vehicle, wherein the AoIP gateway server comprises at least one processor, wherein the communications management system is configured to convert an ACARS message from a first message format to a second message format, (a) wherein when the ACARS message is a downlink message, the first message format represents a format that is used by the communications management system for processing ACARS messages, and the second message format represents a format that is used by at least one ground operations center for processing ACARS messages: wherein at least one of the communications management system or the AoIP gateway server is configured to send the downlink message in the second message format to the at least one ground operations center, (b) wherein when the ACARS message is an uplink message, the first message format represents a format that is used by the at least one ground operations center for processing ACARS messages, and the second message format represents a format that is used by the communications management system for processing ACARS messages: wherein at least one of the AoIP gateway server or the communications management system is configured to receive the uplink message directly from the at least one ground operations center, wherein the uplink message designates at least one intended recipient of the uplink message.

Example 9 includes the system of Example 8, wherein when the ACARS message is the downlink message, the first message format is an Aeronautical Radio Incorporated (ARINC)-618 (A618) message format, wherein the second message format is an ARINC-620 (A620) message format, wherein when the ACARS message is the uplink message, the first message format is an A620 message format, wherein the second message format is an A618 message format.

Example 10 includes the system of any of Examples 8-9, wherein the AoIP gateway server is configured to receive the ACARS uplink message directly addressed from the at least one ground operations center instead of via a datalink service provider.

Example 11 includes the system of any of Examples 8-10, wherein the communications management system is configured to forward the downlink message in the second message format to the AoIP gateway server, wherein the AoIP gateway server is configured to send the downlink message to the at least one ground operations center via an AoIP communication link.

Example 12 includes the system of any of Examples 8-11, wherein the communications management system is configured to send the downlink message in the second message format to the at least one ground operations center via an AoIP communication link.

Example 13 includes the system of any of Examples 8-12, wherein the communications management system is configured to receive the downlink message in a third message format from an avionics device associated with the vehicle, wherein the third message format represents a format that is used by the avionics device in generating ACARS messages, wherein the communications management system is configured to convert the downlink message from the third message format to the first message format

Example 14 includes the system of any of Examples 8-13, wherein the communications management system is configured to convert the uplink message from the second message format to a third message format, wherein the third message format represents a format that is used by an avionics device associated with the vehicle in processing ACARS messages, wherein the communications management system is configured to forward the uplink message in the third message format to the avionics device.

Example 15 includes a method for processing an Aircraft Communications, Addressing, and Reporting System (ACARS) message between a vehicle and at least one ground operations center, the method comprising: (a) when the ACARS message is a downlink message originating from a system on the vehicle: generating the downlink message in a message format used by the at least one ground operations center for processing ACARS messages; and sending the downlink message in the message format directly to the at least one ground operations center via an ACARS over Internet Protocol (AoIP) communication link, (b) when the ACARS message is an uplink message originating from the at least one ground operations center: receiving the uplink message directly from the at least one ground operations center via the AoIP communication link, wherein the uplink message is in the message format used by the at least one ground operations center for processing ACARS messages, wherein the uplink message designates an intended recipient on the vehicle; processing the uplink message based on the intended recipient; and when the intended recipient is an avionics device on the vehicle, forwarding the processed uplink message to the intended recipient.

Example 16 includes the method of Example 15, wherein generating the downlink message in a message format used by the at least one ground operations center for processing ACARS messages comprises generating the downlink message via a communications management system coupled to the vehicle; and further comprising: sending the downlink message in the message format to the at least one ground operations center directly via the AoIP communication link.

Example 17 includes the method of any of Examples 15-16, wherein receiving the uplink message directly from the at least one ground operations center via the AoIP communication link comprises receiving the uplink message at a communications management system coupled to the vehicle, and further comprising: converting the uplink message in the message format to a second message format, wherein the second message format represents a format used by the avionics device in processing ACARS messages; and forwarding, by the communications management system, the uplink message in the second message format to the avionics device.

Example 18 includes the method of any of Examples 15-17, wherein generating the downlink message in a message format used by the at least one ground operations center for processing ACARS messages comprises: processing, via a communications management system coupled to the vehicle, the downlink message in a first message format, wherein the first message format represents a format that is native to the communications management system; and converting, via the communications management system, the downlink message from the first message format to the message format used by the at least one ground operations center for processing ACARS messages.

Example 19 includes the method of any of Examples 15-18, wherein generating the downlink message in a message format used by the at least one ground operations center for processing ACARS messages comprises: receiving, via an AoIP gateway server of the vehicle, the downlink message from a communications management system in a first message format, wherein the first message format represents a format used by the communications management system in processing ACARS messages; and converting, via the AoIP gateway server, the downlink message from the first message format to the message format used by the at least one ground operations center for processing ACARS messages, and wherein sending the downlink message in the message format comprises sending the downlink message to the at least one ground operations center via the AoIP gateway server.

Example 20 includes the method of any of Examples 15-19, wherein processing the uplink message based on the intended recipient comprises: converting, via an AoIP gateway server of the vehicle, the uplink message from the message format to a second message format, wherein the second message format represents a format used by a communications management system in processing ACARS messages, wherein the communications management system is coupled to the vehicle; and forwarding, via the AoIP gateway server, the uplink message in the second message format to the communications management system.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system, comprising:
a communications management system coupled to a vehicle; and
an Aircraft Communications, Addressing, and Reporting System (ACARS) over Internet Protocol (AoIP) gateway server coupled to the communications management system on the vehicle, wherein the AoIP gateway server comprises at least one processor, wherein the AoIP gateway server is configured to convert an ACARS message from a first message format to a second message format,
(a) wherein when the ACARS message is a downlink message, the first message format represents a format that is used by the communications management system for processing ACARS messages, and the second message format represents a format that is used by at least one ground operations center for processing ACARS messages:
wherein the communications management system is configured to receive or generate the downlink message, and to send the downlink message in the first message format to the AoIP gateway server,
wherein the AoIP gateway server is configured to send the downlink message in the second message format to the at least one ground operations center;
(b) wherein when the ACARS message is an uplink message, the first message format represents a format that is used by the at least one ground operations center for processing ACARS messages, and the second message format represents a format that is used by the communications management system for processing ACARS messages:
wherein the AoIP gateway server is configured to receive the uplink message in the first message format directly from the at least one ground operations center,
wherein the AoIP gateway server is configured to forward the uplink message in the second message format to the communications management system.

2. The system of claim 1, wherein when the ACARS message is the downlink message, the first message format is an Aeronautical Radio Incorporated (ARINC)-618 (A618) message format, wherein the second message format is an ARINC-620 (A620) message format,
wherein when the ACARS message is the uplink message, the first message format is an A620 message format, wherein the second message format is an A618 message format.

3. The system of claim 1, wherein the AoIP gateway server is configured to send the downlink message directly addressed to the at least one ground operations center without forwarding the downlink message to a datalink service provider.

4. A system, comprising:
a communications management system coupled to a vehicle; and
an Aircraft Communications, Addressing, and Reporting System (ACARS) over Internet Protocol (AoIP) gateway server coupled to the communications management system on the vehicle, wherein the AoIP gateway server comprises at least one processor,
wherein the communications management system is configured to convert an ACARS message from a first message format to a second message format,
(a) wherein when the ACARS message is a downlink message, the first message format represents a format that is used by the communications management system for processing ACARS messages, and the second message format represents a format that is used by at least one ground operations center for processing ACARS messages:
wherein at least one of the communications management system or the AoIP gateway server is configured to send the downlink message in the second message format to the at least one ground operations center,
(b) wherein when the ACARS message is an uplink message, the first message format represents a format that is used by the at least one ground operations center for processing ACARS messages, and the second message format represents a format that is used by the communications management system for processing ACARS messages:
wherein at least one of the AoIP gateway server or the communications management system is configured to receive the uplink message directly from the at least one ground operations center, wherein the uplink message designates at least one intended recipient of the uplink message.

5. The system of claim 4, wherein the communications management system is configured to forward the downlink message in the second message format to the AoIP gateway server, wherein the AoIP gateway server is configured to send the downlink message to the at least one ground operations center via an AoIP communication link.

6. The system of claim 4, wherein the communications management system is configured to send the downlink message in the second message format to the at least one ground operations center via an AoIP communication link.

7. A method for processing an Aircraft Communications, Addressing, and Reporting System (ACARS) message between a vehicle and at least one ground operations center, the method comprising:
(a) when the ACARS message is a downlink message originating from a system on the vehicle:
generating the downlink message in a message format used by the at least one ground operations center for processing ACARS messages; and
sending the downlink message in the message format directly to the at least one ground operations center via an ACARS over Internet Protocol (AoIP) communication link,
(b) when the ACARS message is an uplink message originating from the at least one ground operations center:
receiving the uplink message directly from the at least one ground operations center via the AoIP communication link, wherein the uplink message is in the message format used by the at least one ground operations center for processing ACARS messages, wherein the uplink message designates an intended recipient on the vehicle;
processing the uplink message based on the intended recipient; and
when the intended recipient is an avionics device on the vehicle, forwarding the processed uplink message to the intended recipient.

8. The method of claim 7, wherein generating the downlink message in a message format used by the at least one ground operations center for processing ACARS messages comprises generating the downlink message via a communications management system coupled to the vehicle; and further comprising:
sending the downlink message in the message format to the at least one ground operations center directly via the AoIP communication link.

9. The method of claim 7, wherein receiving the uplink message directly from the at least one ground operations center via the AoIP communication link comprises receiving the uplink message at a communications management system coupled to the vehicle, and further comprising:
converting the uplink message in the message format to a second message format, wherein the second message format represents a format used by the avionics device in processing ACARS messages; and
forwarding, by the communications management system, the uplink message in the second message format to the avionics device.

10. The method of claim 7, wherein generating the downlink message in a message format used by the at least one ground operations center for processing ACARS messages comprises:
receiving, via an AoIP gateway server of the vehicle, the downlink message from a communications management system in a first message format, wherein the first message format represents a format used by the communications management system in processing ACARS messages; and
converting, via the AoIP gateway server, the downlink message from the first message format to the message format used by the at least one ground operations center for processing ACARS messages, and
wherein sending the downlink message in the message format comprises sending the downlink message to the at least one ground operations center via the AoIP gateway server.
